# EUROPEAN PATENT APPLICATION

(11) **EP 4 354 242 A1**
(43) Date of publication of application: **17.04.2024**
(21) Application number: 22885424.6
(22) Date of filing: 05.09.2022
(51) Int. Cl.: G05B 23/02

(54) **REMOTE DEBUGGING METHOD AND APPARATUS**

(30) Priority: 01.11.2021 CN 202111283676
(71) Applicant: Shanghai Kong Intelligent Building Co., Ltd, Shanghai 200080 (CN); GD Midea Heating & Ventilating Equipment Co., Ltd., Foshan, Guangdong 528311 (CN)
(72) Inventor: HUANG, Wentian, Shanghai 200080 (CN); YAN, Jie, Shanghai 200080 (CN)
(74) Representative: RGTH
(86) International application number: PCT/CN2022/117083
(87) International publication number: WO 2023/071534

(57) **Abstract**

Provided are a remote debugging method and apparatus, an electronic device, a computer-readable storage medium, a computer program product, and a computer program. The method comprises: receiving first operation data of a controller (S101); according to a debugging instruction, acquiring the first operation data of the controller to be debugged, wherein the debugging instruction comprises identification information of the controller to be debugged (S102); and generating debugging data according to the first operation data, and sending the debugging data to the controller to be debugged (S 103).

## Description

### CROSS-REFERENCE TO RELATED APPLICATIONS

The application is based on and claims priority to Chinese Patent Application No. 202111283676.2, filed on November 1, 2021, the entire content of which is incorporated herein by reference.

### FIELD

The present disclosure relates to the technical field of intelligent control, and specifically to a remote debugging method and device therefor, an electronic device, computer-readable storage medium, computer program product and computer program.

### BACKGROUND

A controller belongs to the building automatic control product, where the building equipment may be subjected to some adjustments and debugging according to the owner's demand. In the related art, when debugging the controller, technicians need to debug on site, which however are unable to arrive at the site for debugging at once when the customer has demand. It is not in time and of high cost.

### SUMMARY

The present disclosure aims to solve at least one of the technical problems in the related art to a certain degree.

According to a first aspect of embodiments of the present disclosure, there is provided a remote debugging method, for a cloud server side, comprising: receiving first operating data of a controller; acquiring the first operating data of a controller to be debugged according to a debugging instruction, wherein the debugging instruction comprises an identification of the controller to be debugged; and generating debugging data according to the first operating data, and transmitting the debugging data to the controller to be debugged.

According to a second aspect of embodiments of the present disclosure, there is provided another remote debugging method, for a client side, comprising: transmitting first operating data of a controller; and receiving debugging data corresponding to a controller to be debugged, and debugging the controller to be debugged according to the debugging data.

According to a third aspect of embodiments of the present disclosure, there is provided a remote debugging device, for a cloud server side, comprising: a first receiving module, configured to receive first operating data of a controller; a data acquiring module, configured to acquire the first operating data of a controller to be debugged according to a debugging instruction, wherein the debugging instruction comprises an identification of the controller to be debugged; and a data transmitting module, configured to generate debugging data according to the first operating data, and transmit the debugging data to the controller to be debugged.

According to a fourth aspect of embodiments of the present disclosure, there is provided another remote debugging device, for a client side, comprising: a transmitting module, configured to transmit first operating data of a controller; and a receiving module, configured to receive debugging data corresponding to a controller to be debugged, and debug the controller to be debugged according to the debugging data.

According to a fifth aspect of embodiments of the present disclosure, there is provided an electronic device, comprising: at least one processor; and a memory, communicated to said at least one processor, wherein the memory has stored therein executable instructions that, when executed by said at least one processor, achieve a remote debugging method according to the first or second aspect of embodiments of the present disclosure.

According to a sixth aspect of embodiments of the present disclosure, there is provided a non-transitory computer-readable storage medium having stored therein computer executable instructions that, when executed by a computer, achieves a remote debugging method according to the first or second aspect of embodiments of the present disclosure.

According to a seventh aspect of embodiments of the present disclosure, there is provided a computer program product, comprising a computer program that, when executed by a processor, achieves a remote debugging method according to the first or second aspect of embodiments of the present disclosure.

According to an eighth aspect of embodiments of the present disclosure, there is provided a computer program, comprising a computer program code that, when executed by a computer, implements a remote debugging method according to the first or second aspect of embodiments of the present disclosure.

### BRIEF DESCRIPTION OF THE DRAWINGS

Figure 1 is a block diagram showing a remote debugging method according to at least one of examples of the present disclosure.
Figure 2 is a schematic diagram showing a remote debugging according to at least one of examples of the present disclosure.
Figure 3 is a block diagram showing a remote debugging method according to at least one of examples of the present disclosure.
Figure 4 is a block diagram showing transmission of debugging data to a controller to be debugged, according to at least one of examples of the present disclosure.
Figure 5 is a schematic diagram showing acquirement for debugging data, according to at least one of examples of the present disclosure.
Figure 6 is a block diagram showing reception to second operating data of a controller to be debugged, according to at least one of examples of the present disclosure.
Figure 7 is a schematic diagram showing generation of a target data architecture, according to at least one of examples of the present disclosure.
Figure 8 is a block diagram showing a remote debugging method according to at least one of examples of the present disclosure.
Figure 9 is a block diagram showing another remote debugging method according to at least one of examples of the present disclosure.
Figure 10 is a block diagram showing transmission of second operating data, according to at least one of examples of the present disclosure.
Figure 11 is a schematic diagram showing acquirement for second operating data, according to at least one of examples of the present disclosure.
Figure 12 is a schematic diagram showing a remote debugging device according to at least one of examples of the present disclosure.
Figure 13 is a schematic diagram showing a remote debugging device according to at least one of examples of the present disclosure.
Figure 14 is a schematic diagram showing an electronic device according to at least one of examples of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are illustrative, and used to generally understand the present disclosure. The embodiments shall not be construed to limit the present disclosure.

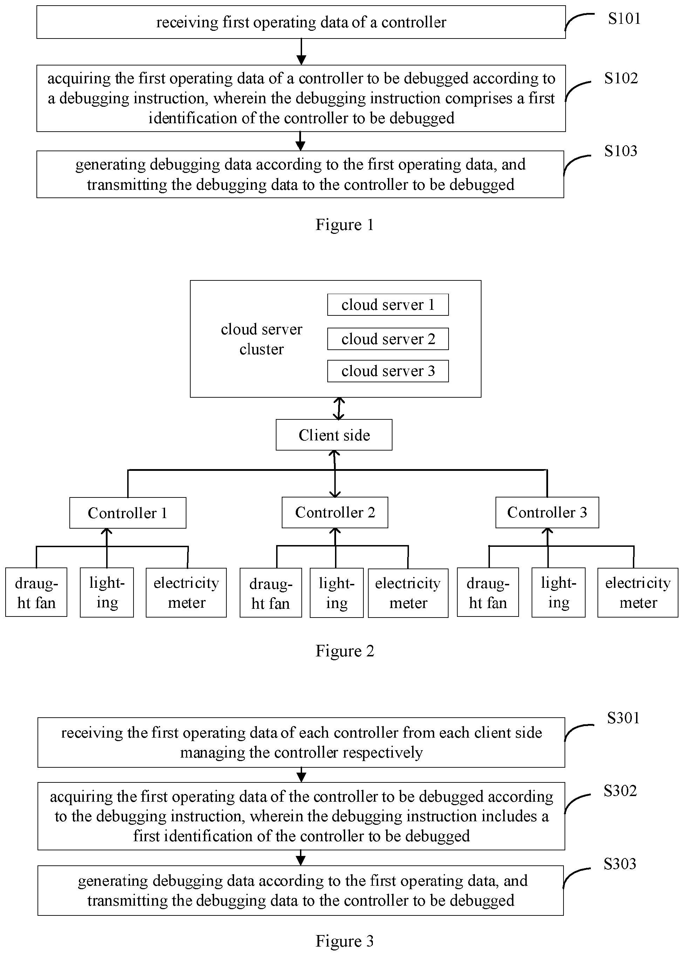

Figure 1 is a block diagram showing a remote debugging method provided in at least one of examples of the present disclosure. As shown in Figure 1, the remote debugging method comprises the following steps 5101-5103.

At the S101, first operating data of a controller is received.

There are generally a lot of environmental monitoring equipment and electromechanical equipment in the interior of buildings. The equipment belonging to a same kind builds an integrated subsystem, through a controller. In a building, there are generally many subsystems, such as security subsystem, air conditioning subsystem, cold and heat source subsystem, water supply and drainage subsystem, power transformation and distribution subsystem, lighting subsystem, elevator subsystem and so on.

To achieve a remote debugging to the controller, the controller may transmit its first operating data in real time to a remote device capable of performing debugging. In some examples, the remote device capable of performing debugging may be a server, a cloud, a control terminal, a debugging terminal, etc., that is, the server, the cloud, the control terminal, the debugging terminal, etc. receive the first operating data of the controller.

At the S102, the first operating data of a controller to be debugged is acquired according to a debugging instruction, where the debugging instruction comprises an identification of the controller to be debugged.

In some examples, the controller may transmit the first operating data, by itself, to the remote device capable of performing debugging. In some examples, the controller may be a direct digital control (DDC) controller, a programmable logic controller (PLC) and so on.

In other examples, the controller may transmit the first operating data to a client side, and the client side unifies and manages the controller, and transmits the first operating data to the remote device capable of performing debugging.

The remote device capable of performing debugging such as the server, the cloud, the control terminal, the debugging terminal, etc., after receiving the debugging instruction, acquires the first operating data according to the debugging instruction and the identification of the controller to be debugged comprised in the debugging instruction. The debugging instruction may be generated according to external instructions of debugging personnel or customers, or be automatically generated according to internal debugging strategies.

At the S103, debugging data is generated according to the first operating data, and the debugging data is transmitted to the controller to be debugged.

The debugging personnel start to debug according to the received first operating data. In some examples, debugging may be interface dragging, compilation deployment, etc. Based on debugging by debugging personnel, the device performing debugging generates the debugging data and transmits the debugging data to the controller to be debugged.

The present disclosure provides in at least one of examples the remote debugging method, comprising: receiving the first operating data of a controller; acquiring the first operating data of a controller to be debugged according to the debugging instruction, where the debugging instruction comprises the identification of the controller to be debugged; and generating the debugging data according to the first operating data, and transmitting the debugging data to the controller to be debugged. According to examples of the present disclosure, the device performing debugging may acquire real-time information of several controllers, such that the debugging personnel can remotely acquire the information of the controllers through the device performing debugging to remotely debug the controller, which is more convenient and faster with reduced costs.

Figure 2 is a schematic diagram showing a remote debugging system according to at least one of examples of the present disclosure. The remote debugging system comprises: a plurality of cloud servers, a plurality of client sides and a plurality of controllers, where one cloud server may correspond to one or more client side(s), each of which manages one or more controller(s).

In some examples, the controller under the management of the client side may be a direct digital control (DDC) controller (known as DDC controller). When the controller under the management of the client side is a DDC controller, a DDC system may comprise central control equipment, field DDC controller, communication network, and corresponding sensors, actuators, regulating valves and other components. There are generally a lot of environmental monitoring equipment and electromechanical equipment in the interior of buildings. The equipment belonging to a same kind builds an integrated subsystem, through a DDC controller. In a building, there are generally many subsystems, such as security subsystem, air conditioning subsystem, cold and heat source subsystem, water supply and drainage subsystem, power transformation and distribution subsystem, lighting subsystem, elevator subsystem and so on.

The remote debugging method provided in examples of the present disclosure is illustrated below, by taking the remote debugging system as shown in Figure 2 as an example.

Figure 3 is a block diagram showing a remote debugging method according to at least one of examples of the present disclosure. As shown in Figure 3, the remote debugging method comprises the following steps 5301-5303.

At the S301, the first operating data of each controller is received from each client side managing the controller respectively.

As shown in Figure 2, the controller may manage the monitoring subsystem which is under the control of the controller, and transmit the first operating data representing an operating state of the monitoring subsystem to the client side, which transmits the first operating data sent by the controller to the cloud server, thereby realizing intensive management of the client side. The first operating data comprises resource usage state data and/or configuration information of the controller to be debugged. For example, the configuration information may comprise html, css, js, svg, icon, etc., and the resource usage state data may comprise real-time data of hardware. In some examples, the cloud server may implement a two-level storage mechanism. On the one hand, the binding relationship between the cloud server and the client side and the controller managed by the client side would be persisted locally, thereby forming a mapping relationship that can be read on demand and can prevent from loss resulting from power failure. On the other hand, the cloud server would store this binding relationship in memory to achieve high-speed reading and high-speed matching.

In some examples, when the cloud server receives the first operating data transmitted by the client side, heartbeat data may be sent to the client side at set intervals to keep the pipeline alive.

At the S302, the first operating data of the controller to be debugged is acquired according to the debugging instruction, where the debugging instruction comprises an identification of the controller to be debugged.

When the controller requires debugging, the debugging personnel may communicate with the cloud server through a terminal device, for example, through the browser of the terminal device, and transmit the debugging instruction for debugging the controller to be debugged to the cloud server, and the cloud server receives the debugging instruction sent by the debugging personnel through the browser of the terminal device. The debugging instruction comprises identification of the controller to be debugged, such as an IP address of the controller to be debugged. In some examples, the terminal device may be a mobile phone, tablet, computer, etc.

The cloud server, according to the received debugging instruction and the identification of the controller to be debugged therein, extracts the first operating data corresponding to the controller to be debugged. The first operating data comprises resource usage state data and/or configuration information of the controller to be debugged. For example, the configuration information may comprise html, css, js, svg, icon, etc., and the resource usage state data may comprise real-time data of hardware.

At the S303, debugging data is generated according to the first operating data, and the debugging data is transmitted to the controller to be debugged.

The debugging personnel start to debug according to the first operating data as received. In some examples, debugging may be interface dragging, compilation deployment, etc. Based on debugging of debugging personnel, the cloud server generates the debugging data and transmits the debugging data to a target client side to which the controller to be debugged belongs, and the target client side transmits the debugging data to the controller to be debugged.

The present disclosure provides in examples the remote debugging method, comprising: receiving the first operating data of each controller from each client side managing the controller respectively; acquiring the first operating data of a controller to be debugged according to the debugging instruction, where the debugging instruction comprises the identification of the controller to be debugged; and generating the debugging data according to the first operating data, and transmitting the debugging data to the controller to be debugged. According to examples of the present disclosure, the cloud server may acquire real-time information of the controller managed by several client sides, such that the debugging personnel can remotely acquire the information of the controllers from the cloud server through the terminal device, to remotely debug the controller, which is more convenient and faster with reduced costs.

In some examples, when there are multiple cloud servers, all cloud servers may be grouped into a cloud server cluster, and a balancing server is set in the cloud server cluster. Debugging personnel send the debugging instruction to the balancing server in the cloud server cluster, which determines a cloud server for processing the debugging instruction according to load status of each cloud server in the cluster, and transmits the debugging instruction to the determined cloud server, thereby realizing a load balance in the cloud server cluster. For example, if there are three cloud servers and one balancing server in the cloud server cluster and two of them are working, the balancing server can distribute the debugging instruction to the third cloud server.

In some examples, after receiving the first operating data transmitted by the server, it is judged whether the first operating data carries the project identification and the client's identification; and if the first operating data does not carry the project identification or the client's identification, a filter may be set on the cloud server, where the filter searches for the project identification or the client's identification based on the anti-theft chain technology in Hyper Text Transfer Protocol (HTTP), and adds the project identification and/or the identification into the first operating data. For example, the project information corresponding to the controller to be debugged may be "** Park", and the identification of the client side to which the controller to be debugged belongs may be an IP address of the client side.

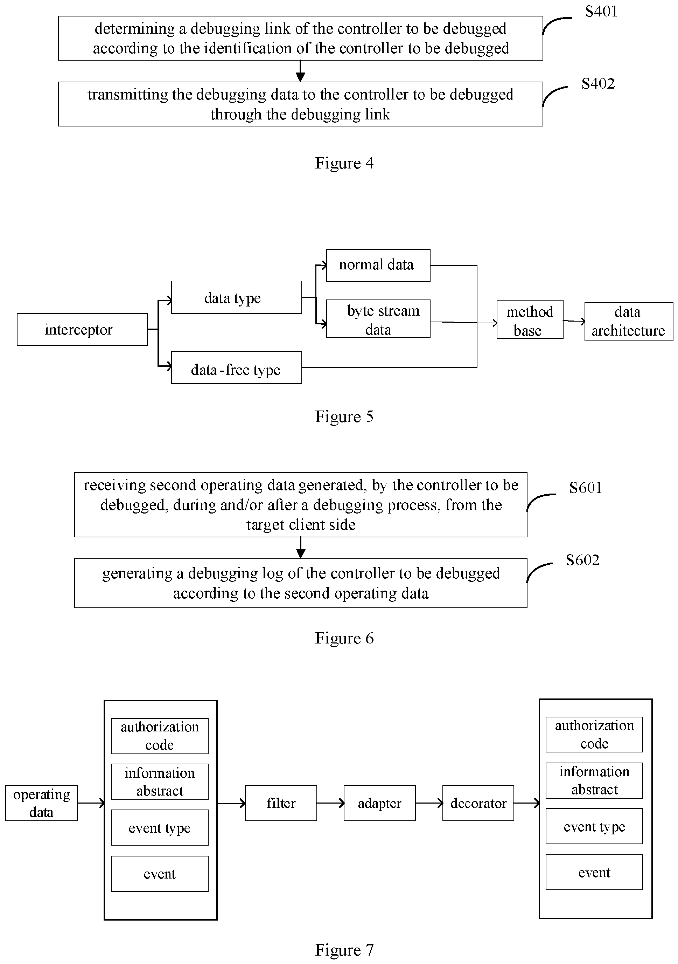

Figure 4 is a block diagram showing a remote debugging method according to at least one of examples of the present disclosure, which is executed by a cloud server side. As shown in Figure 4, the transmission of debugging data to a target client side to which a controller to be debugged belongs comprises the following steps 5401-5402.

At the S401, a debugging link of the controller to be debugged is determined according to the identification of the controller to be debugged.

The project identification of the controller to be debugged and the identification of the client side to which the controller to be debugged belongs are determined according to the identification of the controller to be debugged; and the debugging link is generated based on the identification and the project identification of the controller to be debugged, and the identification of the target client side to which the controller to be debugged belongs. For example, the project information corresponding to the controller to be debugged may be "** Park", the identification of the client side to which the controller to be debugged belongs may be an IP address of the client side, and the identification of the controller to be debugged may be an IP address of the controller to be debugged.

At the S402, the debugging data is transmitted to the controller to be debugged through the debugging link.

Figure 5 is a schematic diagram showing acquirement for debugging data. As shown in Figure 5, an interceptor is set on the cloud server for judging a debugging type of the debugging instruction, for example, the debugging type may be a data type or a data-free type, where the data type may be divided into a normal data type and a byte stream data type. Based on the debugging type, a method base required to be called for the debugging type is acquired, and a data architecture, for debugging correspondingly, as the debugging data, is generated. After acquiring the debugging data, the debugging data is transmitted to the target client side through the debugging link, and further transmitted to the controller to be debugged, thereby realizing debugging for the controller to be debugged.

In some examples, the method base may comprise a P method base and a G method base. The method base automatically identifies whether the debugging type is the data type or data-free type and a request mode. If it is a get request, it will enter the G method base, which has methods calling html, svg, png, etc.; if it is a Post request, it will enter the P method base, which contains user-configured methods, time methods, node methods, language methods, etc.

According to at least one examples of the present disclosure, by the method the debugging link of each controller is determined, such that the cloud server can accurately and quickly find the target client side, so as to complete the debugging of the controller.

Figure 6 is a block diagram showing a remote debugging method according to at least one of examples of the present disclosure, which is executed by a cloud server side. As shown in Figure 6, subsequent to transmitting the debugging data to the target client side to which the controller to be debugged belongs, the method further comprises the following steps 5601-5602.

At the S601, second operating data generated, by the controller to be debugged, during and/or after a debugging process, is received from the target client side.

The second operating data generated, by the controller to be debugged, during and/or after the debugging process, is received from the target client side. The second operating data comprises resource usage state data and/or configuration information of the controller to be debugged. For example, the configuration information may comprise html, css, js, svg, icon, etc., and the resource usage state data may comprise real-time data of hardware.

After receiving the second operating data transmitted by the server, it is judged whether the second operating data carries the project identification and the client's identification; and if the second operating data does not carry the project identification or the client's identification, the project identification or the client's identification may be searched based on the anti-theft chain technology in HTTP, and added into the first operating data.

Figure 7 is a schematic diagram showing generation of a target data architecture. As shown in Figure 7, the received second operating data is collated for removing unnecessary information and retain key information, thereby reducing the amount of data transmitted. The second operating data with unnecessary information removed is adjusted and cleaned structurally on a hierarchical structure of authorization code, information abstract, event type and event, and finally converted into a relatively fixed data structure through filters, adapters and decorators, to generate the target data architecture.

At the S602, a debugging log of the controller to be debugged is generated according to the second operating data.

The debugging log of the debugged controller is generated according to the second operating data which is transmitted by the client side and generated during and/or after the debugging process. The debugging log may record debugging requesting data, debugging data and debugging result data.

According to at least one of examples of the present disclosure, the cloud server receives the second operating data generated, by the controller to be debugged, during and/or after the debugging process, and generates the debugging log, which is beneficial for debugging personnel to monitor information of the debugged controller in real time, and the log recorded in the cloud server facilitates subsequent reference when required.

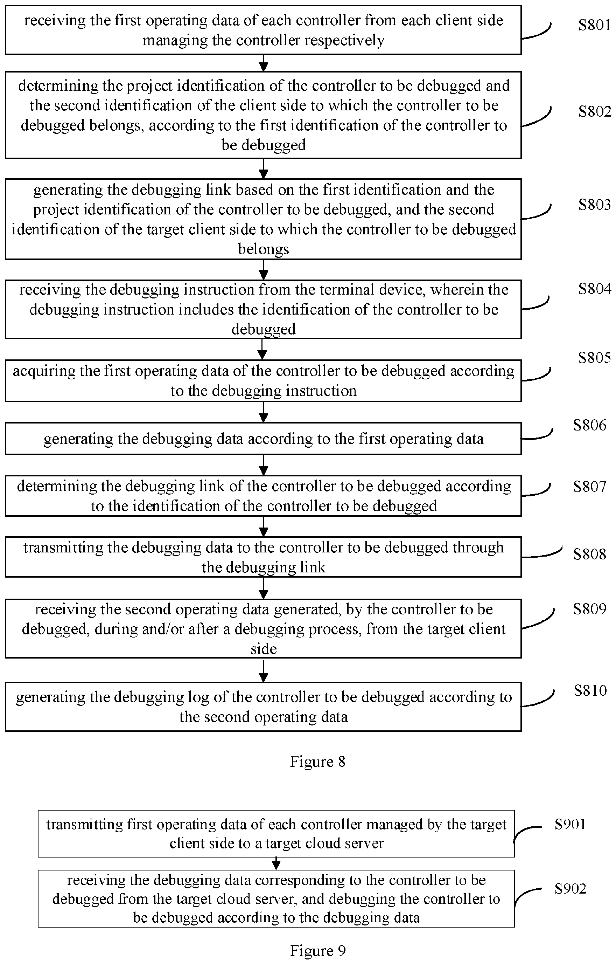

Continuing to take the debugging structure of Figure 2 as an example, Figure 8 is a schematic diagram of a remote debugging method according to at least one of examples of the present disclosure, which is executed by a cloud server side. As shown in Figure 8, the remote debugging method comprises the following steps 5801 to 5810.

At the 5801, the first operating data of each controller is received from each client side managing the controller respectively.

At the 5802, the project identification of the controller to be debugged and the identification of the client side to which the controller to be debugged belongs are determined according to the identification of the controller to be debugged.

At the S803, the debugging link is generated based on the identification and the project identification of the controller to be debugged, and the identification of the target client side

The steps 5801-5803 may apply to implementation models according to examples of the present disclosure, which will be not repeated herein.

At the 5804, the debugging instruction is received from the terminal device, where the debugging instruction comprises the identification of the controller to be debugged.

At the 5805, the first operating data of the controller to be debugged is acquired according to the debugging instruction.

At the 5806, the debugging data is generated according to the first operating data.

At the S807, the debugging link of the controller to be debugged is determined according to the identification of the controller to be debugged.

At the 5808, the debugging data is transmitted to the controller to be debugged through the debugging link.

The steps 5804-5808 may apply to implementation models according to examples of the present disclosure, which will be not repeated herein.

At the S809, the second operating data generated, by the controller to be debugged, during and/or after a debugging process, is received from the target client side.

At the S810, the debugging log of the controller to be debugged is generated according to the second operating data.

The steps 5809-5810 may apply to implementation models according to examples of the present disclosure, which will be not repeated herein.

The present disclosure further provides in examples the remote debugging method, comprising: receiving the first operating data of each controller from each client side managing the controller respectively; acquiring the first operating data of a controller to be debugged according to the debugging instruction, where the debugging instruction comprises the identification of the controller to be debugged; and generating the debugging data according to the first operating data, and transmitting the debugging data to the target client side to which the controller to be debugged belongs. According to examples of the present disclosure, the cloud server may acquire real-time information of the controller managed by several client sides, such that the debugging personnel can remotely acquire the information of the controllers from the cloud server through the terminal device, to remotely debug the controller, which is more convenient and faster with reduced costs.

An executive subject of the remote debugging method provided by the present disclosure may directly interact with the controller to be debugged with data and/or information. If the executive subject is a client side, data and/or information interaction may be performed with the controller to be debugged. If the executive subject is a cloud server, data and/or information interaction may be performed with the controller to be debugged through the client side.

In some examples, subsequent to transmitting the debugging data to the controller to be debugged, the method further comprises: receiving the second operating data generated, by the controller to be debugged, during and/or after the debugging process; and generating the debugging log of the controller to be debugged according to the second operating data.

In some examples, transmitting the debugging data to the controller to be debugged comprises: determining the debugging link of the controller to be debugged according to the identification of the controller to be debugged; and transmitting the debugging data to the controller to be debugged through the debugging link.

In some examples, subsequent to acquiring the first operating data of a controller to be debugged, the remote debugging method further comprises: determining the project identification of the controller to be debugged and the identification of a client side to which the controller to be debugged belongs, according to the identification of the controller to be debugged; and generating the debugging link based on the identification and the project identification of the controller to be debugged, and the identification of a target client side to which the controller to be debugged belongs.

In some examples, subsequent to acquiring the first operating data or the second operating data, the remote debugging method further comprises: judging whether the first operating data or the second operating data carries the project identification and the identification of the client side; and adding the project identification and/or the identification into the first operating data or the second operating data, in response to the determination that the project identification and/or the identification of the client side are/is not carried.

In some examples, prior to transmitting the debugging data to the controller to be debugged, the remote debugging method further comprises: acquiring the debugging type of the debugging instruction, acquiring the method base required to be called for the debugging type according to the debugging type, and generating the data architecture, for debugging correspondingly, as the debugging data.

In some examples, subsequent to acquiring the first operating data or the second operating data, the remote debugging method further comprises: collating the first operating data or the second operating data to obtain key information; and adjusting the key information structurally to generate the target data architecture.

Continuing to take the debugging structure of Figure 2 as an example, Figure 9 is a schematic diagram of a remote debugging method according to at least one of examples of the present disclosure, which is executed by a target client side. As shown in Figure 9, the remote debugging method comprises the following steps S901-S902.

At the S901, first operating data of each controller managed by the target client side is transmitted to a target cloud server.

The client side transmits the first operating data of each controller under its management in real time to the target cloud server. The first operating data comprises resource usage state data and/or configuration information of the controller to be debugged. For example, the configuration information may comprise html, css, js, svg, icon, etc., and the resource usage state data may comprise real-time data of hardware.

At the S902, debugging data corresponding to a controller to be debugged is received from the target cloud server, and the controller to be debugged is debugged according to the debugging data.

When debugging personnel debugs the controller to be debugged, the client side receives the debugging data corresponding to the controller to be debugged from the target cloud server, and debugs the controller to be debugged according to the debugging data.

The present disclosure further provides in examples another remote debugging method, comprising: transmitting the first operating data of each controller managed by the target client side to the target cloud server; and receiving the debugging data corresponding to the controller to be debugged from the target cloud server, and debugging the controller to be debugged according to the debugging data. According to examples of the present disclosure, the cloud server may acquire real-time information of the controller managed by several client sides, such that the debugging personnel can remotely acquire the information of the controllers from the cloud server through the terminal device, to remotely debug the controller, which is more convenient and faster with reduced costs.

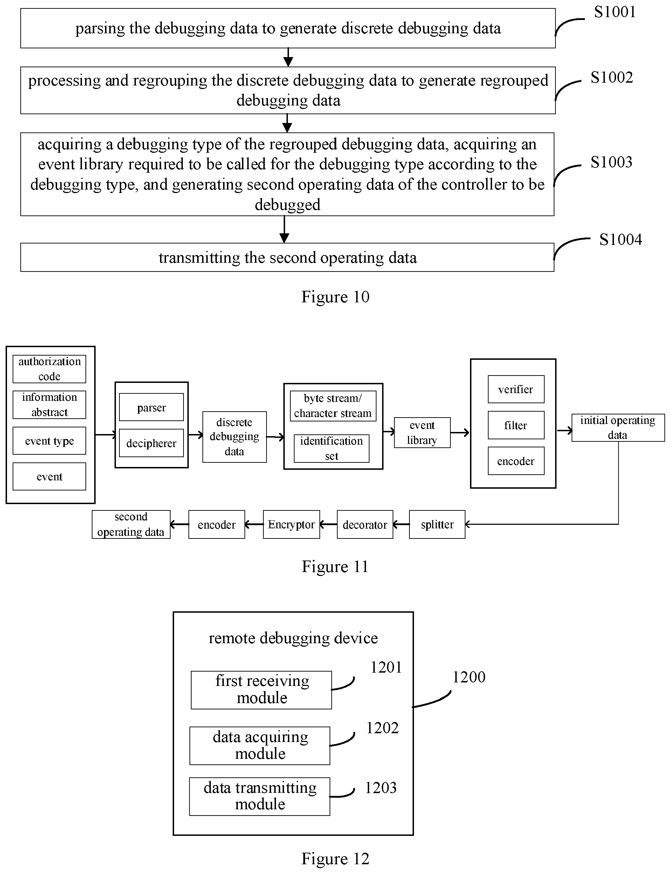

Continuing to take the debugging structure of Figure 2 as an example, Figure 10 is a schematic diagram of a remote debugging method according to at least one of examples of the present disclosure, which is executed by a target client side. As shown in Figure 10, subsequent to receiving the debugging data corresponding to the controller to be debugged from the target cloud server, the method further comprises the following steps 51001-51004.

At the S1001, the debugging data is parsed to generate discrete debugging data.

Figure 11 is a schematic diagram showing acquirement for second operating data. As shown in Figure 11, the debugging data, received by the client side from the cloud server, is parsed with a parser and a decipherer, so as to generate several discrete debugging data, which may divided into a byte stream/character stream and an identification set.

At the S1002, the discrete debugging data is processed and regrouped to generate the regrouped debugging data.

The several discrete debugging data is processed, and then regrouped by a decorator, so as to generate the regrouped debugging data.

At the S1003, a debugging type of the regrouped debugging data is acquired, an event library required to be called for the debugging type is acquired according to the debugging type, and second operating data of the controller to be debugged is generated.

The debugging type the regrouped debugging data corresponds to is acquired. For example, the regrouped debugging data may correspond to html, css, js, svg, icon, etc., or real-time data of hardware. As shown in Figure 11, according to the debugging type, the event library required to be called for the debugging type is acquired, and initial operating data of the controller to be debugged is generated through a verifier, a filter, and an encoder. The initial operating data is split, decorated, encrypted and encoded to generate the second operating data finally. The second operating data comprises resource usage state data and/or configuration information of the controller to be debugged. The cloud server judges the debugging type, and according to different debugging types goes to different event libraries, which contains corresponding sub-events and an addressing mapping table preset in advance, and the identification of a target controller can be quickly and efficiently found through the addressing mapping table. The addressing mapping table is made according to the network topology structure prepared in advance. After the cloud server finds a target address, the target address is returned back to an initial result set which has tracing markers of relevant events. With the tracing marker, an original debugging instruction could be found in an addresser, forming a closed loop. In some examples, the addressing mapping table may be stored in the addresser, which implements a two-level mechanism, one persistent to disk and the other resident in memory, to achieve high speed reading and matching.

At the S1004, the second operating data is transmitted.

Subsequent to acquiring the second operating data, the second operating data generated, by the controller to be debugged, during and/or after the debugging process is transmitted to the target cloud server through debugging link.

According to at least one of examples of the present disclosure, the client side transmits the second operating data generated, by the controller to be debugged, during and/or after the debugging process to the target cloud server, which is beneficial for debugging personnel to monitor information of the debugged controller in real time.

In some examples, subsequent to receiving the debugging data corresponding to a controller to be debugged, and debugging the controller to be debugged according to the debugging data, the remote debugging method further comprises: transmitting the second operating data generated, by the controller to be debugged, during and/or after the debugging process.

In some examples, the operating data of the controller comprises resource usage state data and/or configuration information of the controller to be debugged.

In some examples, subsequent to receiving debugging data corresponding to a controller to be debugged, the remote debugging method further comprises: parsing the debugging data to generate discrete debugging data; processing and regrouping the discrete debugging data to generate regrouped debugging data; acquiring a debugging type of the regrouped debugging data, acquiring an event library required to be called for the debugging type according to the debugging type, and generating second operating data of the controller to be debugged; and transmitting the second operating data.

Figure 12 is a schematic diagram showing a remote debugging device according to at least one of examples of the present disclosure. As shown in Figure 12, the remote debugging device 1200 is installed at a cloud server, comprising: a first receiving module 1201, a data acquiring module 1202 and a data transmitting module 1203.

The first receiving module 1201 is configured to receive first operating data of a controller.

The data acquiring module 1202 is configured to acquire the first operating data of a controller to be debugged according to a debugging instruction, where the debugging instruction comprises an identification of the controller to be debugged.

The data transmitting module 1203 is configured to generate debugging data according to the first operating data, and transmit the debugging data to the controller to be debugged.

In some examples, the data transmitting module 1203 is further configured to receive second operating data generated, by the controller to be debugged, during and/or after a debugging process; and generate a debugging log of the controller to be debugged according to the second operating data.

In some examples, the operating data of the controller comprises resource usage state data and/or configuration information of the controller to be debugged.

In some examples, the data transmitting module 1203 is further configured to determine a debugging link of the controller to be debugged according to the identification of the controller to be debugged; and transmit the debugging data to the controller to be debugged through the debugging link.

In some examples, the first receiving module 1201 is further configured to determine a project identification of the controller to be debugged and an identification of a client side to which the controller to be debugged belongs, according to the identification of the controller to be debugged; and generate the debugging link based on the identification and the project identification of the controller to be debugged, and the identification of a target client side to which the controller to be debugged belongs.

In some examples, the remote debugging device 1200 further comprises an identification judging module 1204, configured to judge whether the first operating data or the second operating data carries the project identification and the identification of the client side; and adding the project identification and/or the identification into the first operating data or the second operating data in response to the determination that the project identification and/or the identification of the client side are/is not carried.

In some examples, the data transmitting module 1203 is further configured to acquire a debugging type of the debugging instruction, acquire a method base required to be called for the debugging type according to the debugging type, and generate a data architecture, for debugging correspondingly, as the debugging data.

In some examples, the remote debugging device 1200 further comprises a collating module, configured to collate the first operating data or the second operating data to obtain key information; and to adjust the key information structurally to generate a target data architecture.

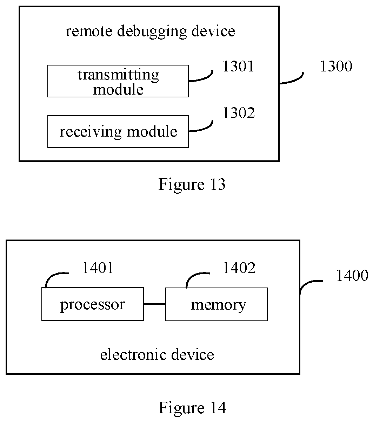

Figure 13 is a schematic diagram showing a remote debugging device according to at least one of examples of the present disclosure. As shown in Figure 13, the remote debugging device 1300 is installed at a client side, comprising a transmitting module 1301 and a receiving module 1302.

The transmitting module 1301 is configured to transmit first operating data of a controller.

The receiving module 1302 is configured to receive debugging data corresponding to a controller to be debugged, and debug the controller to be debugged according to the debugging data.

In some examples, the receiving module 1302 is further configured to transmit second operating data generated, by the controller to be debugged, during and/or after a debugging process.

In some examples, the operating data of the controller comprises resource usage state data and/or configuration information of the controller to be debugged.

In some examples, the receiving module 1302 is further configured to parse the debugging data to generate discrete debugging data; process and regroup the discrete debugging data to generate regrouped debugging data; acquire a debugging type of the regrouped debugging data, acquire an event library required to be called for the debugging type according to the debugging type, and generate second operating data of the controller to be debugged; and transmit the second operating data.

To achieve the above examples, the present disclosure further provides in examples an electronic device 1400. As shown in Figure 14, the electronic device 1400 comprises: a processor 1401; and a memory 1402, communicated to the processor, where the memory 1402 has stored therein executable instructions that, when executed by the processor 1401, achieve a remote debugging method according to the above examples.

To achieve the above examples, the present disclosure further provides in examples a non-transitory computer-readable storage medium having stored therein computer executable instructions that, when executed by a computer, achieves a remote debugging method according to the above examples.

To achieve the above examples, the present disclosure further provides in examples a computer program product, comprising a computer program that, when executed by a processor, achieves a remote debugging method according to the above examples.

To achieve the above examples, the present disclosure further provides in examples a computer program, comprising a computer program code that, when executed by a computer, implements a remote debugging method according to the above examples.

It should be noted that the interpretation for a remote debugging method according to the above examples applies in a remote debugging device, an electronic device, a non-transitory computer-readable storage medium, a computer program product and a computer program according to the above examples, which will not be repeated herein.

In the specification, it should be understood that, the terms indicating orientation or position relationship such as "central", "longitudinal", "lateral", "width", "thickness", "above", "below", "front", "rear", "right", "left", "vertical", "horizontal", "top", "bottom", "inner", "outer", "clockwise", "counter-clockwise", "axial", "radial", "circumferential" should be construed to refer to the orientation or position relationship as then described or as shown in the drawings. These terms are merely for convenience and concision of description and do not alone indicate or imply that the device or element referred to must have a particular orientation or must be configured or operated in a particular orientation. Thus, it cannot be understood to limit the present disclosure.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more than two this features, unless specified otherwise.

Reference throughout this specification to "an embodiment," "some embodiments," "an example," "a specific example," or "some examples," means that a particular feature, structure, material, or characteristic described in connection with the embodiment or example is comprised in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples. Besides, any different embodiments and examples and any different characteristics of embodiments and examples may be combined by those skilled in the art without contradiction.

Although explanatory embodiments have been shown and described, it would be appreciated by those skilled in the art that the above embodiments cannot be construed to limit the present disclosure, and changes, alternatives, and modifications can be made in the embodiments in the scope of the present disclosure.

## Claims

1. A method for remote debugging, for a cloud server side, comprising:
receiving a first operating data of a controller;
acquiring the first operating data of a controller to be debugged according to a debugging instruction, wherein the debugging instruction comprises an identification of the controller to be debugged; and
generating a debugging data according to the first operating data, and transmitting the debugging data to the controller to be debugged.

2. The method according to claim 1, wherein subsequent to transmitting the debugging data to the controller to be debugged, the method further comprises:
receiving a second operating data generated, by the controller to be debugged, during and/or after a debugging process; and
generating a debugging log of the controller to be debugged according to the second operating data.

3. The method according to claim 1 or 2, wherein the operating data of the controller comprises a resource usage state data of the controller to be debugged and/or a configuration information of the controller to be debugged.

4. The method according to any one of claims 1 to 3, wherein transmitting the debugging data to the controller to be debugged, comprises:
determining a debugging link of the controller to be debugged according to the identification of the controller to be debugged; and
transmitting the debugging data to the controller to be debugged through the debugging link.

5. The method according to any one of claims 1 to 4, wherein subsequent to acquiring the first operating data of a controller to be debugged, the method further comprises:
determining a project identification of the controller to be debugged and an identification of a client side, according to the identification of the controller to be debugged; and
generating the debugging link based on the identification of the controller to be debugged, the project identification of the controller to be debugged, and the identification of the target client side.

6. The method according to any one of claims 2 to 5, wherein subsequent to acquiring the first operating data or the second operating data, the method further comprises:
judging whether the first operating data or the second operating data carries the project identification and the identification of the client side; and
adding the project identification and/or the identification of the client side into the first operating data or the second operating data in response to the determination that the project identification and/or the identification of the client side are/is not carried.

7. The method according to any one of claims 1 to 6, wherein prior to transmitting the debugging data to the controller to be debugged, the method further comprises:
acquiring a debugging type of the debugging instruction, acquiring a method base required to be called for the debugging type according to the debugging type, and generating a data architecture corresponding for debugging as the debugging data.

8. The method according to any one of claims 2 to 7, wherein subsequent to acquiring the first operating data or the second operating data, the method further comprises:
collating the first operating data or the second operating data to obtain a key information; and
adjusting the key information structurally to generate a target data architecture.

9. A method for remote debugging, for a client side, comprising:
transmitting a first operating data of a controller; and
receiving a debugging data corresponding to a controller to be debugged, and debugging the controller to be debugged according to the debugging data.

10. The method according to claim 9, wherein subsequent to receiving a debugging data corresponding to a controller to be debugged, and debugging the controller to be debugged according to the debugging data, the method further comprises:
transmitting a second operating data generated, by the controller to be debugged, during and/or after a debugging process.

11. The method according to claim 9 or 10, wherein the operating data of the controller comprises a resource usage state data and/or a configuration information of the controller to be debugged.

12. The method according to any one of claims 9 to 11, wherein subsequent to receiving a debugging data corresponding to a controller to be debugged, the method further comprises:
parsing the debugging data to generate a discrete debugging data;
processing and regrouping the discrete debugging data to generate a regrouped debugging data;
acquiring a debugging type of the regrouped debugging data, acquiring an event library required to be called for the debugging type according to the debugging type, and generating a second operating data of the controller to be debugged; and
transmitting the second operating data.

13. A remote debugging device, for a cloud server side, comprising:
a first receiving module, configured to receive a first operating data of a controller;
a data acquiring module, configured to acquire the first operating data of a controller to be debugged according to a debugging instruction, wherein the debugging instruction comprises an identification of the controller to be debugged; and
a data transmitting module, configured to generate a debugging data according to the first operating data, and transmit the debugging data to the controller to be debugged.

14. A remote debugging device, for a client side, comprising:
a transmitting module, configured to transmit a first operating data of a controller; and
a receiving module, configured to receive a debugging data corresponding to a controller to be debugged, and debug the controller to be debugged according to the debugging data.

15. An electronic device, comprising:
at least a processor; and
a memory, communicated to said at least one processor,
wherein the memory has stored therein an executable instruction that, when executed by said at least one processor, achieve a remote debugging method according to any one of claims 1 to 8 or 9 to 12.

16. A non-transitory computer-readable storage medium having stored therein a computer executable instruction that, when executed by a computer, achieves a remote debugging method according to any one of claims 1 to 8 or 9 to 12.

17. A computer program product, comprising a computer program that, when executed by a processor, achieves a remote debugging method according to any one of claims 1 to 8 or 9 to 12.

18. A computer program, comprising a computer program code that, when executed by a computer, implements a remote debugging method according to any one of claims 1 to 8 or 9 to 12.
